# EUROPEAN PATENT SPECIFICATION

(11) **EP 3 364 210 B1**
(45) Date of publication and mention of the grant of the patent: **28.10.2020**
(21) Application number: 17465503.5
(22) Date of filing: 20.02.2017
(51) Int. Cl.: G01S 7/40, G01S 13/86, G01S 13/931

(54) **METHOD AND DEVICE FOR DETECTING BLOCKAGE OF A RADAR SYSTEM, AND VEHICLE**
VERFAHREN UND VORRICHTUNG ZUM ERKENNEN EINER BLOCKADE EINES RADARSYSTEMS UND FAHRZEUG
PROCÉDÉ ET DISPOSITIF POUR DÉTECTER LE BLOCAGE D'UN SYSTÈME DE RADAR ET VÉHICULE

(43) Date of publication of application: 22.08.2018
(73) Proprietor: Continental Automotive GmbH, 30165 Hannover (DE)
(72) Inventor: Olaru, Ion Marian, 555300 Cisnadie (RO)
(74) Representative: Bobbert, Christiana

(56) References cited:
- DE-A1-102006 059 916
- JP-A- 2009 243 963
- US-A1- 2014 142 800
- US-A1- 2015 309 165

## Description

The invention relates to a method for detecting blockage of a radar system of a vehicle, to a device for detecting blockage of a radar system of a vehicle, and to a vehicle.

Modern driver assistance systems rely on data of a plurality of sensors, such as cameras, radar sensors or infrared sensors. The driver assistance systems can then use the sensor data for traffic monitoring or for an emergency brake assistant.

However, under bad weather conditions, such as fog, rain, snow or ice, a proper functioning of the sensors is often no longer guaranteed. In order to reliably perform the safety functions provided by the driver assistance system, it is crucial that reliable criteria are identified for determining whether specific sensors are reliably working or not.

Radar sensors are particularly susceptible to heavy rain, mud or snow. Under such conditions, predictions made on the basis of the radar data may be incorrect. For example, non-existing objects may be falsely detected based on the incorrect radar data.

The document US 2014/142800 A1 describes a method for detecting blockage of a radar system according to the preamble of claim 1.

Furthermore the document JP 2009 243963 A describes an object detection with a first detection part for detecting an object in a first area and a second detection part for detecting an object in a second area. The object detection in the first detection part is via radar and an object detection in the second detection part is via cameras. A detection determining part is further provided for determining whether or not at least one object is detected by the second detection part, wherein the one object is included in a third area which is included in the first area and in the second area.

From document US 2009/0243912 A1, a blockage detection system for a radar sensor is known, where a target is detected within a virtual detection zone and target related information is accumulated in order to determine if a missed alert signal should be generated.

However, it is often difficult to determine whether the radar device is malfunctioning solely based on the data obtained by the radar device itself.

Accordingly, it is an object of the present invention to provide a more precise and reliable way to detect blockage of a radar system.

In accordance with the invention, a method for detecting blockage of a radar system as recited in claim 1 is provided. Further, the invention provides a device for detecting blockage of a radar system of a vehicle as recited in claim 10. The invention further provides a vehicle as recited in claim 15. Various preferred features of the invention are recited in the dependent claims.

According to one aspect, therefore, the invention provides a method for detecting blockage of a radar system of a vehicle, wherein radar data is collected by the radar system, and camera data is collected by a camera system of the vehicle. A first set of objects is detected in the surrounding of the vehicle based on the camera data. A second set of objects is detected in the surrounding of the vehicle based on the radar data. A third set of objects is determined as an intersection of the first set of objects and the second set of objects. Blockage of the radar system is detected depending on the third set of objects.

According to a second aspect of the invention, a device for detecting blockage of a radar system of a vehicle is provided, comprising an interface and a detection unit. The interface is adapted to receive radar data collected by the radar system and is adapted to receive camera data collected by a camera system of the vehicle. The detection unit is adapted to detect a first set of objects in the surrounding of the vehicle based on the camera data and to detect a second set of objects in the surrounding of the vehicle based on the radar data. The detection unit is further adapted to determine a third set of objects as an intersection of the first set of objects and the second set of objects. The detection unit detects blockage of the radar system depending on the third set of objects.

According to a third aspect, the invention provides a vehicle which comprises a radar system which is adapted to collect radar data. The vehicle further comprises a camera system adapted to collect camera data. The vehicle comprises a device which is adapted to detect blockage of the radar system based on the radar data and the camera data.

An underlying idea of the present invention is the observation that radar systems and camera systems have different sensitivities with regard to external conditions, such as the influence of weather. For instance, cameras are more likely to be blocked by fog, ice or dust, while a radar system is more susceptible to heavy rain, mud or snow. Further, the cameras of the camera system are usually arranged at locations of the vehicle which differ from the locations of the radar devices of the radar system. Accordingly, information obtained by the camera system can be used to cross check if the radar system is blocked or not.

For example, if the first set of objects detected based on the camera data substantially differs from the second set of objects based on the radar data, i.e., if the third set of objects is considerably smaller than the second set of objects, there is a high probability that the radar system is blocked. Accordingly, blockage of the radar system will be detected based on such information.

Therefore, the invention provides a way to combine the data obtained by both the radar system and the camera system in order to detect blockage of the radar system.

According to the invention, blockage of the radar system refers to possible obstructions of the radar system based on objects or particles which are reducing the detection range of the radar system.

According to the invention, a first indicator is determined based on a number of objects within the first set of objects. The first indicator refers to a sensor quality of the camera system. Further, a second indicator is determined based on a comparison of the number of objects within the first set of objects with a number of objects within the third set of objects, wherein the second indicator refers to a relation between the sensor quality of the camera system and a sensor quality of the radar system. Blockage of the radar system is detected based on the first indicator and the second indicator. The first indicator can be used to determine whether the camera data is used at all in order to detect blockage. The second indicator can then be used in order to determine whether both the radar system and the camera system basically work under the same conditions, i.e., if the objects detected based on the camera data basically agree with the objects detected based on the radar data. Furthermore a blockage of the radar system is detected if a mean distance of the objects within the second set of objects is smaller than a distance threshold value, wherein the distance threshold value is adjusted based on the second indicator. If the mean distance of the objects is too small, it is very likely that the radar system is blocked and cannot be used to determine the presence of objects which are farther away from the vehicle. However, instead of using a fixed threshold value, a dynamical adjustment of the threshold value is performed, wherein the sensor quality of the radar system is also taken into account. Therefore, the method provides more solid results as compared to methods using a fixed threshold value.

According to a further embodiment of the method, blockage of the radar system is detected if a time period since a last detection of an object based on the radar data is smaller than a time threshold value, wherein the time threshold value is adjusted based on the second indicator. If no new objects have been determined for a longer period of time, it is very likely that the radar system is blocked. Again, instead of using a fixed time threshold value, a dynamical adjustment of the time threshold value is used.

According to a further embodiment of the method, the distance threshold value and/or the time threshold value are only adjusted if the first indicator exceeds a predetermined threshold. That is to say, the respective threshold values are only adjusted if a sufficient sensor quality of the camera system can be guaranteed, which increases the reliability of the second indicator.

According to another embodiment of the method, the distance threshold value and/or the time threshold value are adjusted by reweighting the old value using the second indicator. Preferably, the distance threshold value is increased if the second indicator decreases. In this way, blockage is detected earlier because a bad sensor quality of the radar system has been determined based on the second indicator. Likewise, the time threshold value is preferably reduced if the second indicator of decreases. In this way, blockage is already detected if no new objects are determined after a short time if it has been detected based on the second indicator that the sensor quality of the radar system is low.

According to a further embodiment of the method, the second indicator is recursively updated by reweighting the old value for the second indicator and by adding a term depending on a ratio between the number of objects within the third set of objects and the number of objects within the first set of objects. Thus, the second indicator increases if the number of the first set of objects is essentially equal to the number of the third set of objects. In this case, the radar data is reliable and the sensor quality of the camera system is comparable to the quality of the radar system.

According to a further embodiment of the method, the first indicator is recursively updated by increasing the first indicator if the number of objects within the first set of objects is larger than a first predetermined value and by decreasing the first indicator if the number of objects within the first set of objects is smaller than a predetermined value. For instance, the first indicator can be increased if the number of objects within the first set of objects is nonzero, i.e., larger than 0. Likewise, the first indicator can be decreased if the number of objects within the first set of objects is 0, i.e., smaller than 1. The first indicator is related to the sensor quality of the camera system. If no object can be detected based on the camera data, the sensor quality of the camera system is generally low. In such cases, the first indicator is reduced. In contrast, if at least a certain number of objects can be detected based on the camera data, the camera system is generally reliable. Accordingly, the first indicator is increased.

According to further embodiment of the method, the first indicator is only increased and/or decreased between a predetermined maximum value and a predetermined minimum value. For example, the first indicator may be restricted to the range between 0 and 1.

According to a further embodiment of the device, the detection unit is adapted to determine a first indicator based on a number of objects within the first set of objects, wherein the first indicator refers to a sensor quality of the camera system. The detection unit further determines a second indicator based on a comparison of the number of objects within the first set of objects with a number of objects within the third set of objects, wherein the second indicator refers to a relation between the sensor quality of the camera system and a sensor quality of the radar system. The detection unit detects blockage of the radar system based on the first indicator and based on the second indicator.

According to a further embodiment of the device, the detection unit is further adapted to detect blockage if a mean distance of the objects within the second set of objects is smaller than a distance threshold value, and wherein the detection unit is adapted to adjust the distance threshold value based on the second indicator.

According to a preferred embodiment of the device, the detection unit is further adapted to detect blockage if a time period since a last detection of an object based on the radar data is smaller than a time threshold value. The detection unit adjusts the time threshold value based on the second indicator.

According to a preferred embodiment of the device, the detection unit is adapted to adjust the distance threshold value and/or the time threshold value by reweighting the old value using the second indicator.

For a more complete understanding of the invention and the advantages thereof, exemplary embodiments of the invention are explained in more detail in the following description with reference to the accompanying drawing figures, in which like reference characters designate like parts and in which:
- Fig. 1: shows a schematic block diagram of a device for detecting blockage of a radar system according to an embodiment of the invention;
- Fig. 2: shows a schematic view of respective first, second and third set of objects;
- Fig. 3: shows a flowchart for determining respective first and second indicators;
- Fig. 4: shows an illustration of characteristic mean distances of objects from the vehicle as a function of time;
- Fig. 5: shows an illustration of an adjustment of a distance threshold value;
- Fig. 6: shows an illustration of an adjustment of a time threshold value according to an embodiment of the invention;
- Fig. 7: shows a schematic block diagram of a vehicle according to an embodiment of the invention; and
- Fig. 8: shows a flowchart of a method for detecting blockage of a radar system according to an embodiment of the invention.

The accompanying drawings are included to provide a further understanding of the present invention and are incorporated in and constitute a part of this specification. The drawings illustrate particular embodiments of the invention and together with the description serve to explain the principles of the invention. Other embodiments of the invention and many of the attendant advantages of the invention will be readily appreciated as they become better understood with reference to the following detailed description.

It will be appreciated that common and well understood elements that may be useful or necessary in a commercially feasible embodiment are not necessarily depicted in order to facilitate a more abstracted view of the embodiments. It will further be appreciated that certain actions and/or steps in an embodiment of a method may be described or depicted in a particular order of occurrences while those skilled in the art will understand that such specificity with respect to sequence is not actually required. It will also be understood that the terms and expressions used in the present specification have the ordinary meaning as is accorded to such terms and expressions with respect to their corresponding respective areas of inquiry and study, except where specific meanings have otherwise been set forth herein.

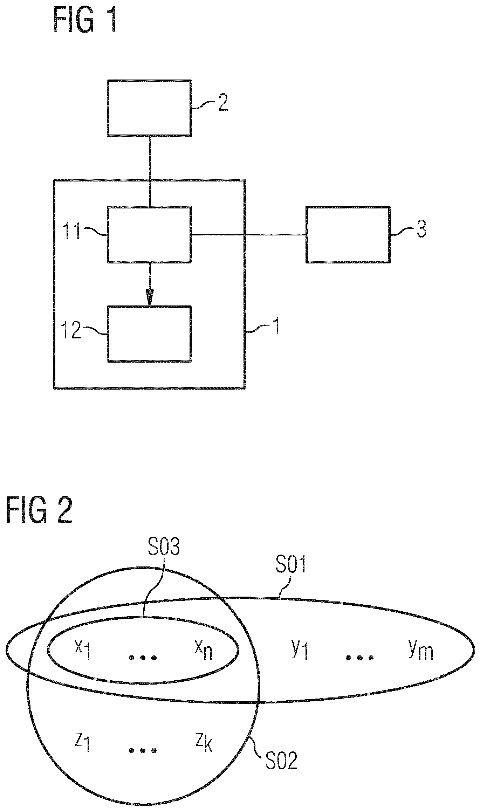

Figure 1 shows a schematic block diagram of a device 1 for detecting blockage of a radar system 2 of a vehicle. The device 1 comprises an interface 11 which is adapted to receive radar data collected by the radar system 2. The radar system 2 comprises at least one radar device which is adapted to collect radar data in a surrounding of the vehicle. The interface 11 is further adapted to receive camera data collected by a camera system 3 of the vehicle. The camera system 3 comprises at least one camera and preferably a plurality of cameras which are arranged around the vehicle and are adapted to collect camera data of the surrounding of the vehicle.

The device 1 further comprises a detection unit 12. The detection unit 12 is adapted to detect a first set of objects SO1 in the surrounding of the vehicle V based on the camera data. For instance, the first set of objects SO1 may comprise vehicles, persons, road boundaries, trees or buildings. The first set of objects SO1 may be detected based on standard object recognition methods known to the person skilled in the art.

The detection unit 12 is further adapted to detect a second set of objects SO2 in the surrounding of the vehicle V based on the radar data. The second set of objects SO2 may also comprise one of the above mentioned objects.

Preferably, the detection unit 12 detects the first set of objects SO1 and the second set of objects SO2 using the same criteria, i.e., detecting the same kind of objects.

The detection unit 12 is further adapted to determine a third set of objects SO3 as an intersection of the first set of objects SO1 and the second set of objects SO2. In order to determine the third set of objects SO3, the detection unit 12 can also map elements within the first set of objects SO1 to corresponding elements within the second set of objects SO2, for example based on similar spatial coordinates of the elements within the first set of objects SO1 or the second set of objects SO2, or based on specific properties such as shapes or edges of objects within the first set of objects SO1 or the second set of objects SO2.

For instance, as shown in figure 2, the first set of objects SO1 may comprise elements X1 to Xn and Y1 to Ym. The second set of objects SO2 may comprise elements X1 to Xn and Z1 to Zk. The third set of objects SO3 then comprises the elements X1 to Xn.

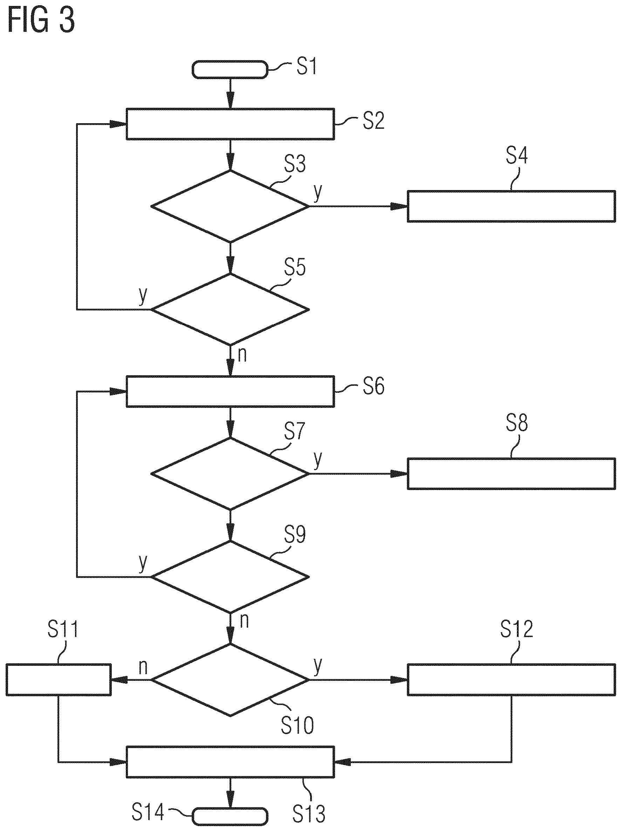

The detection unit 12 is further adapted to determine a first indicator q and a second indicator r. Preferably, the detection unit 12 is adapted to perform the method shown in the flowchart in figure 3 to determine the first indicator q and the second indicator r.

In a first step S1, the method is initiated. In a second step S2, a set containing all objects detected in the surrounding of the vehicle is generated based on the camera data and elements within this set of all objects are browsed. In an optional step S3, the selected object is classified according to a predetermined filtering condition and only selected objects are added to the first set of objects SO1. For example, only objects of a certain type are added to the first set of objects SO1. If an object is added to the first set of objects SO1, the number N1 of elements within the first set of objects SO1 is increased by 1 in a step S4.

In a step S5, the detection unit 12 checks if the set of all objects contains further elements. If this is the case, steps S2 to S4 are repeated. Otherwise, the detection unit 12 browses through the second set of objects SO2 in a step S6.

In method step S7, the detection unit 12 checks whether the selected element within the second set of objects SO2 is also contained within the first set of objects SO1 and/or corresponds to an element within the first set of objects SO1. If this is the case, the detection unit 12 adds the object to a third set of objects SO3 and increases the number N3 of elements within the third set of objects SO3 by 1 in a method step S8.

In step S9, the detection unit 12 checks if the second set of objects SO2 contains further elements. If this is the case, the steps S6 to S8 are repeated. Otherwise, the detection unit 12 checks in a step S10 if the number N1 of elements within the first set of objects SO1 exceeds a predetermined value, for instance 0. If this is the case, a first indicator q is increased by a predetermined value, for instance 0.05 in step S12. The initial starting value for the first indicator q can be any predetermined value, for instance 0. Thus, the detection unit 12 updates the first indicator q according to the following prescription:
q → q + 0.05.

Moreover, a second indicator r is updated. The initial value for the second indicator r can be any predetermined value, for example 0. The second indicator r is then re-weighted, for instance by multiplication with a value of 0.9 and by adding a term depending on a ratio between the number N3 of elements within the third set of objects SO1 and the number N1 of objects within the first set of objects SO3. For example, the second indicator r can be updated according to the following prescription:
r → 0.9·r + 0.1·N3/N1.

If in step S10 it is instead determined that the number N1 of elements within the first set of objects SO1 is smaller than a predetermined value, for example if the number N1 of elements within the first set of objects SO1 is 0, the first indicator q is decreased by a predetermined value, for instance by 0.05 in the method step S11. Thus, the detection unit 12 updates the first indicator q according to the following prescription:
q → q - 0.05.

Preferably, the first indicator q is not decreased below a value of 0 and is not increased above a value of 1. The second indicator r is not updated in this case.

In a further step S13, the first indicator q and the second indicator r are given as an output.

In method step S14, the detection unit 12 detects blockage of the radar system 2 depending on the first indicator q and the second indicator r.

According to an embodiment, the detection unit 12 is adapted to compute a mean distance of the objects within the second set of objects SO2 from the vehicle. If the mean distance of the objects is smaller than a distance threshold value, the detection unit 12 detects blockage of the radar system 2.

The distance threshold value is initially fixed to a predetermined value, for example 5 m. The initial distance threshold value can also depend on a type of the radar system 2. For example, a first distance threshold value v1 can relate to a near-scan-region radar system 2 while a second distance threshold v2 can refer to a far-scan-region radar system 2.

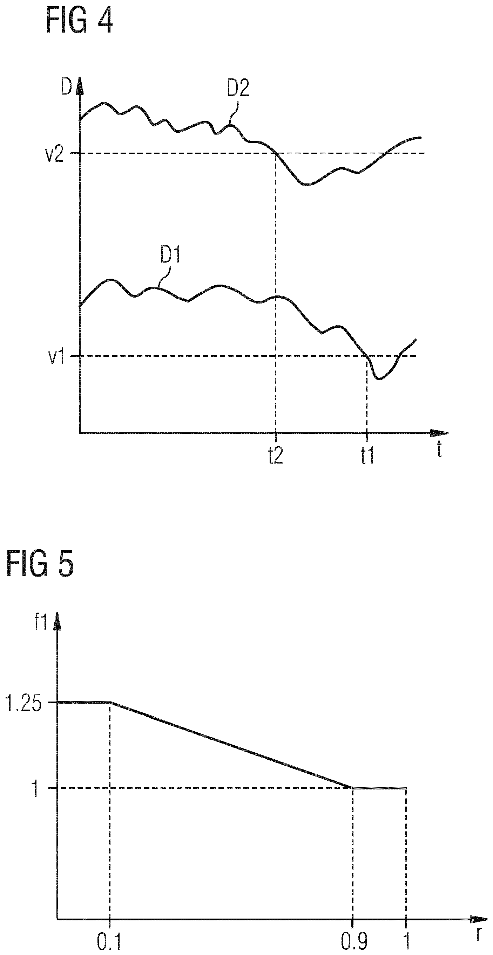

As illustrated in figure 4, if the mean distance d1 at a certain time point t1 is smaller than the first distance threshold value v1, blockage of the near-scan radar system 2 is detected. Likewise, if the mean distance d2 at a certain time point t2 is smaller than the second distance threshold value v2, blockage of the far-scan radar system 2 is detected.

Depending on the second indicator r, the distance threshold value is adjusted. For example, the predetermined initial value of the distance threshold value can be multiplied by a first rescaling factor f1. An exemplary dependence of the scaling factor on the second indicator r is illustrated in figure 5. Accordingly, if the second indicator r is smaller than 0.1, the first rescaling factor f1 is equal to 1.25. If the second indicator r it is larger than 0.9, the first rescaling factor f1 is equal to 1. In the region where the second indicator r lies between 0.1 and 0.9, the first rescaling factor f1 is linearly interpolated between 1.25 and 1.

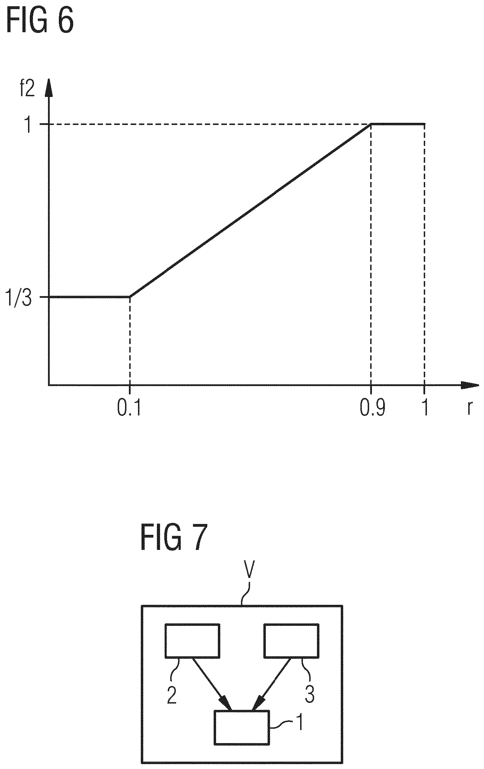

According to a further embodiment, blockage is detected if a time period since a last detection of an object based on the radar data is smaller than a time threshold value. An initial value for the time threshold value can be fixed to a predetermined value, for example 60 s. The time threshold value is then further adjusted based on the second indicator r. For example, the time threshold value can be multiplied by a second rescaling factor f2 as illustrated in figure 6.

Accordingly, the second rescaling factor f2 is equal to 1/3 if the second indicator r is smaller than a predetermined value of 0.1. The second rescaling factor f2 is equal to 1 if the second indicator r is larger than a predetermined value of 0.9. If the second indicator r lies in the range between 0.1 and 0.9, the second rescaling factor f2 is linearly interpolated between 1/3 and 1.

The invention is not restricted to the depicted rescaling factors. Preferably, the first rescaling factor f1 is a monotonically decreasing function of the second indicator r. The second rescaling factor f2 is preferably a monotonically increasing function of the second indicator r.

Blockage of the radar sensor can also be determined based both on the distance threshold value and on the time threshold value.

Preferably, the distance threshold value and/or the time threshold value are only adjusted if the first indicator q exceeds a predetermined threshold, for example if the first indicator q is greater than 0.5.

Figure 7 shows a block diagram of a vehicle V according to an embodiment of the invention. The vehicle V comprises a radar system 2 which is adapted to collect radar data and comprises at least one radar device. The vehicle V further comprises a camera system 3 which is adapted to collect camera data and comprises at least one vehicle camera. The vehicle V further comprises a device 1 for detecting blockage of the radar system 2 according to one of the above mentioned embodiments. The device 1 is adapted to analyze the radar data and the camera data as outlined above. The vehicle V may further comprise a driver assistance system which is adapted to control at least one vehicle function of the vehicle V, such as the brakes of the vehicle, based on the detected blockage of the radar system 2. For instance, the driver assistance system may ignore the radar data if blockage of the radar system 3 has been detected.

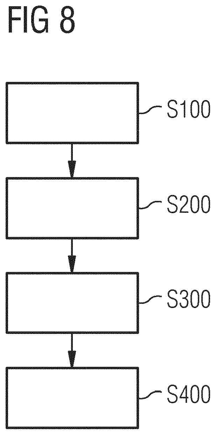

Figure 8 shows a flowchart of a method for detecting blockage of a radar system 2 of the vehicle V according to an embodiment of the invention.

In a first method step S100, radar data is collected by the radar system 2, and camera data is collected by a camera system 3 of the vehicle V.

In a method step S200, a first set of objects SO1 is detected in the surrounding of the vehicle V based on the camera data, and a second set of objects SO2 is detected in the surrounding of the vehicle V based on the radar data.

In a method step S300, a third set of objects SO3 is determined as an intersection of the first set of objects SO1 and the second set of objects SO2. Preferably, respective objects within the first set of objects SO1 may be matched to or identified with respective objects within the second set of objects SO2.

In a further step S400, blockage of the radar system 2 is detected depending on the third set of objects SO3. Preferably, as explained in detail above, a first indicator q and a second indicator r may be determined and blockage may be determined based on the first indicator q and the second indicator r.

Blockage may be detected if a mean distance of the objects within the second set of objects SO2 from the vehicle V is smaller than a distance threshold value and/or if a time period since a last detection of an object based on the radar data is smaller than a time threshold value. The distance threshold value and/or the time threshold value may be adapted and adjusted based on the second indicator r, as explained above and illustrated in figures 5 and 6. Preferably, the first indicator q is increased and/or decreased as explained above.

According to an embodiment, the radar system 2 can be turned off for a predetermined period of time if blockage of the radar system 2 has been detected in order to save energy.

Further, a warning signal can be outputted to a driver of the vehicle V if blockage of the radar system 2 has been detected. The warning signal may comprise an acoustic, optical and/or haptic signal.

Although specific embodiments of the invention have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

In this document, the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

### REFERENCE SIGNS

- 1: device
- 11: interface
- 12: detection unit
- 2: radar system
- 3: camera system
- f1: first rescaling factor
- f2: second rescaling factor
- q: first indicator
- r: second indicator
- SO1: first set of objects
- SO2: second set of objects
- SO3: third set of objects
- V: vehicle
- v1: first distance threshold
- v2: second distance threshold

## Claims

1. A method for detecting blockage of a radar system (2) of a vehicle (V), the method comprising the steps of:
collecting (S100) radar data by the radar system (2), and collecting camera data by a camera system (3) of the vehicle (V);
detecting (S200) a first set of objects (SO1) in the surrounding of the vehicle (V) based on the camera data, and detecting a second set of objects (SO2) in the surrounding of the vehicle (V) based on the radar data;
determining (S300) a third set of objects (SO3) as an intersection of the first set of objects (SO1) and the second set of objects (SO2) ;
determining a first indicator (q) based on a number of objects within the first set of objects (SO1), wherein the first indicator (q) refers to a sensor quality of the camera system (3);
determining a second indicator (r) based on a comparison of the number of objects within the first set of objects (SO1) with a number of objects within the third set of objects (SO3), wherein the second indicator (r) refers to a relation between the sensor quality of the camera system (3) and a sensor quality of the radar system;
detecting (S400) blockage of the radar system (2) based on the first indicator (q) and on the second indicator (r)
**characterized in that**
blockage is detected if a mean distance of the objects within the second set of objects (SO2) is smaller than a distance threshold value, wherein the distance threshold value is adjusted based on the second indicator (r).

2. The method according to claim 1, wherein blockage is detected if a time period since a last detection of an object based on the radar data is smaller than a time threshold value, wherein the time threshold value is adjusted based on the second indicator (r).

3. The method according to claim 2, wherein the distance threshold value and/or time threshold value are only adjusted if the first indicator (q) exceeds a predetermined threshold.

4. The method according to any of claims 2 or 3, wherein the distance threshold value and/or time threshold value are adjusted by reweighting the old value using the second indicator (r).

5. The method according to any of claims 1 to 4, wherein the second indicator (r) is recursively updated by reweighting the old value for the second indicator (r) and by adding a term depending on a ratio between the number of objects within the first set of objects (SO1) and the number of objects within the third set of objects (SO3).

6. The method according to any of claims 1 to 5, wherein the first indicator (q) is recursively updated by increasing the first indicator (q) if the number of objects within the first set of objects (SO1) is larger than a first predetermined value and by decreasing the first indicator (q) if the number of objects within the first set of objects (SO1) is smaller than a second predetermined value.

7. The method according to claim 6, wherein the first indicator (q) is only increased or decreased between a predetermined maximum value and a predetermined minimum value.

8. A device (1) for detecting blockage of a radar system (2) of a vehicle (V), comprising:
an interface (11) adapted to receive radar data collected by the radar system (2) and to receive camera data collected by a camera system (3) of the vehicle (V);
a detection unit (12) which is adapted:
- to detect a first set of objects (SO1) in the surrounding of the vehicle (V) based on the camera data, and to detect a second set of objects (SO2) in the surrounding of the vehicle (V) based on the radar data;
- to determine a third set of objects (SO3) as an intersection of the first set of objects (SO1) and the second set of objects (SO2) ;
- to determine a first indicator (q) based on a number of objects within the first set of objects (SO1), wherein the first indicator (q) refers to a sensor quality of the camera system (3);
- to determine a second indicator (r) based on a comparison of the number of objects within the first set of objects (SO1) with a number of objects within the third set of objects (SO3), wherein the second indicator (r) refers to a relation between the sensor quality of the camera system (3) and a sensor quality of the radar system (2); and
- to detect blockage of the radar system (2) based on the first indicator (q) and on the second indicator (r) **characterized in that**
the detection unit (12) is further adapted to detect blockage if a mean distance of the objects within the second set of objects (SO2) is smaller than a distance threshold value, and to adjust the distance threshold value based on the second indicator (r).

9. The device (1) according to claim 8, wherein the detection unit (12) is further adapted to detect blockage if a time period since a last detection of an object based on the radar data is smaller than a time threshold value, and to adjust the time threshold value based on the second indicator (r).

10. The device (1) according to claim 9, wherein the detection unit (12) is further adapted to adjust the distance threshold value and/or time threshold value by reweighting the old value using the second indicator (r).

11. A vehicle (V) comprising
a radar system (2) adapted to collect radar data;
a camera system (3) adapted to collect camera data;
**characterized in that**
the vehicle further comprising a device (1) according to any of the preceding claims 8 to 10, adapted to detect blockage of the radar system (2) based on the radar data and the camera data.

## Patentansprüche

1. Verfahren zum Erkennen einer Blockade eines Radarsystems (2) eines Fahrzeuges (V), wobei das Verfahren die folgenden Schritte umfasst:
Sammeln (S100) von Radardaten durch das Radarsystem (2) und Sammeln von Kameradaten durch ein Kamerasystem (3) des Fahrzeuges (V);
Erkennen (S200) einer ersten Menge von Objekten (SO1) in der Umgebung des Fahrzeuges (V) auf der Grundlage der Kameradaten und Erkennen einer zweiten Menge von Objekten (SO2) in der Umgebung des Fahrzeuges (V) auf der Grundlage der Radardaten;
Bestimmen (S300) einer dritten Menge von Objekten (SO3) als eine Schnittmenge der ersten Menge von Objekten (SO1) und der zweiten Menge von Objekten (SO2);
Bestimmen eines ersten Indikators (q) auf der Grundlage einer Zahl von Objekten innerhalb der ersten Menge von Objekten (SO1), wobei sich der erste Indikator (q) auf eine Sensorqualität des Kamerasystems (3) bezieht;
Bestimmen eines zweiten Indikators (r) auf der Grundlage eines Vergleiches der Zahl von Objekten innerhalb der ersten Menge von Objekten (SO1) mit einer Zahl von Objekten innerhalb der dritten Menge von Objekten (SO3), wobei sich der zweite Indikator (r) auf eine Beziehung zwischen der Sensorqualität des Kamerasystems (3) und einer Sensorqualität des Radarsystems bezieht;
Erkennen (S400) einer Blockade des Radarsystems (2) auf der Grundlage des ersten Indikators (q) und des zweiten Indikators (r),
**dadurch gekennzeichnet, dass**
eine Blockade erkannt wird, falls ein mittlerer Abstand der Objekte innerhalb der zweiten Menge von Objekten (SO2) kleiner als ein Abstandsschwellenwert ist, wobei der Abstandsschwellenwert auf der Grundlage des zweiten Indikators (r) eingestellt wird.

2. Verfahren nach Anspruch 1, wobei eine Blockade erkannt wird, falls ein Zeitraum seit einer letzten Erkennung eines Objektes auf der Grundlage der Radardaten kleiner als ein Zeitschwellenwert ist, wobei der Zeitschwellenwert auf der Grundlage des zweiten Indikators (r) eingestellt wird.

3. Verfahren nach Anspruch 2, wobei der Abstandsschwellenwert und/oder Zeitschwellenwert nur eingestellt werden/wird, falls der erste Indikator (q) eine vorgegebene Schwelle überschreitet.

4. Verfahren nach einem der Ansprüche 2 oder 3, wobei der Abstandsschwellenwert und/oder Zeitschwellenwert durch Neugewichten des alten Wertes unter Verwendung des zweiten Indikators (r) eingestellt werden/wird.

5. Verfahren nach einem der Ansprüche 1 bis 4, wobei der zweite Indikator (r) rekursiv aktualisiert wird durch Neugewichten des alten Wertes für den zweiten Indikator (r) und durch Hinzufügen eines Terms in Abhängigkeit von einem Verhältnis zwischen der Zahl von Objekten innerhalb der ersten Menge von Objekten (SO1) und der Zahl von Objekten innerhalb der dritten Menge von Objekten (SO3).

6. Verfahren nach einem der Ansprüche 1 bis 5, wobei der erste Indikator (q) rekursiv aktualisiert wird durch Erhöhen des ersten Indikators (q), falls die Zahl von Objekten innerhalb der ersten Menge von Objekten (SO1) größer als ein erster vorgegebener Wert ist, und durch Verringern des ersten Indikators (q), falls die Zahl von Objekten innerhalb der ersten Menge von Objekten (SO1) kleiner als ein zweiter vorgegebener Wert ist.

7. Verfahren nach Anspruch 6, wobei der erste Indikator (q) nur zwischen einem vorgegebenen Maximalwert und einem vorgegebenen Minimalwert erhöht oder verringert wird.

8. Vorrichtung (1) zum Erkennen einer Blockade eines Radarsystems (2) eines Fahrzeuges (V), umfassend:
eine Schnittstelle (11), die so angepasst ist, dass sie Radardaten, gesammelt durch das Radarsystem (2), empfängt und Kameradaten, gesammelt durch ein Kamerasystem (3) des Fahrzeuges (V), empfängt;
eine Erkennungseinheit (12), die so angepasst ist, dass sie:
- eine erste Menge von Objekten (SO1) in der Umgebung des Fahrzeuges (V) auf der Grundlage der Kameradaten erkennt und eine zweite Menge von Objekten (SO2) in der Umgebung des Fahrzeuges (V) auf der Grundlage der Radardaten erkennt;
- eine dritte Menge von Objekten (SO3) als eine Schnittmenge der ersten Menge von Objekten (SO1) und der zweiten Menge von Objekten (SO2) bestimmt;
- einen ersten Indikator (q) auf der Grundlage einer Zahl von Objekten innerhalb der ersten Menge von Objekten (SO1) bestimmt, wobei sich der erste Indikator (q) auf eine Sensorqualität des Kamerasystems (3) bezieht;
- einen zweiten Indikator (r) auf der Grundlage eines Vergleiches der Zahl von Objekten innerhalb der ersten Menge von Objekten (SO1) mit einer Zahl von Objekten innerhalb der dritten Menge von Objekten (SO3) bestimmt, wobei sich der zweite Indikator (r) auf eine Beziehung zwischen der Sensorqualität des Kamerasystems (3) und einer Sensorqualität des Radarsystems (2) bezieht; und
- eine Blockade des Radarsystems (2) auf der Grundlage des ersten Indikators (q) und des zweiten Indikators (r) erkennt;
**dadurch gekennzeichnet, dass**
die Erkennungseinheit (12) ferner so angepasst ist, dass sie eine Blockade erkennt, falls ein mittlerer Abstand der Objekte innerhalb der zweiten Menge von Objekten (SO2) kleiner als ein Abstandsschwellenwert ist, und den Abstandsschwellenwert auf der Grundlage des zweiten Indikators (r) einstellt.

9. Vorrichtung (1) nach Anspruch 8, wobei die Erkennungseinheit (12) ferner so angepasst ist, dass sie eine Blockade erkennt, falls ein Zeitraum seit einer letzten Erkennung eines Objektes auf der Grundlage der Radardaten kleiner als ein Zeitschwellenwert ist, und den Zeitschwellenwert auf der Grundlage des zweiten Indikators (r) einstellt.

10. Vorrichtung (1) nach Anspruch 9, wobei die Erkennungseinheit (12) ferner so angepasst ist, dass sie den Abstandsschwellenwert und/oder Zeitschwellenwert durch Neugewichten des alten Wertes unter Verwendung des zweiten Indikators (r) einstellt.

11. Fahrzeug (V), umfassend
ein Radarsystem (2), das so angepasst ist, dass es Radardaten sammelt;
ein Kamerasystem (3), das so angepasst ist, dass es Kameradaten sammelt;
**dadurch gekennzeichnet, dass**
das Fahrzeug ferner eine Vorrichtung (1) nach einem der vorangehenden Ansprüche 8 bis 10 umfasst, die so angepasst ist, dass sie eine Blockade des Radarsystems (2) auf der Grundlage der Radardaten und der Kameradaten erkennt.

## Revendications

1. Procédé pour détecter un blocage d'un système de radar (2) d'un véhicule (V), le procédé comprenant les étapes de:
recueillir (S100) des données radar par le système de radar (2), et recueillir des données de caméra par un système de caméra (3) du véhicule (V);
détecter (S200) un premier ensemble d'objets (S01) dans les environs du véhicule (V) sur la base des données de caméra, et détecter un deuxième ensemble d'objets (S02) dans les environs du véhicule (V) sur la base des données de radar;
déterminer (S300) un troisième ensemble d'objets (S03) comme intersection du premier ensemble d'objets (S01) et du deuxième ensemble d'objets (S02);
déterminer un premier indicateur (q) basé sur un nombre d'objets dans le premier ensemble d'objets (S01), le premier indicateur (q) renvoyant à une qualité de capteur du système de caméra (3);
déterminer un deuxième indicateur (r) sur la base d'une comparaison du nombre d'objets dans le premier ensemble d'objets (S01) avec un nombre d'objets dans le troisième ensemble d'objets (S03), le deuxième indicateur (r) renvoyant à une relation entre la qualité de capteur du système de caméra (3) et une qualité de capteur du système de radar;
détecter (S400) un blocage du système de radar (2) sur la base du premier indicateur (q) et du deuxième indicateur (r)
**caractérisé en ce que**
un blocage est détecté si une distance moyenne des objets dans le deuxième ensemble d'objets (S02) est inférieure à une valeur seuil de distance, la valeur seuil de distance étant ajustée sur la base du deuxième indicateur (r).

2. Procédé selon la revendication 1, un blocage étant détecté si une plage de temps depuis une dernière détection d'un objet sur la base des données de radar est inférieure à une valeur seuil de temps, la valeur seuil de temps étant ajustée sur la base du deuxième indicateur (r).

3. Procédé selon la revendication 2, la valeur seuil de distance et/ou la valeur seuil de temps étant uniquement ajustées si le premier indicateur (q) dépasse un seuil prédéterminé.

4. Procédé selon l'une quelconque des revendications 2 ou 3, la valeur seuil de distance et/ou la valeur seuil de temps étant ajustées par repondération de l'ancienne valeur en utilisant le deuxième indicateur (r).

5. Procédé selon l'une quelconque des revendications 1 à 4, le deuxième indicateur (r) étant mis à jour de façon récursive par repondération de l'ancienne valeur pour le deuxième indicateur (r) et en ajoutant un terme en fonction d'un rapport entre le nombre d'objets dans le premier ensemble d'objets (S01) et le nombre d'objets dans le troisième ensemble d'objets (S03).

6. Procédé selon l'une quelconque des revendications 1 à 5, le premier indicateur (q) étant mis à jour de façon récursive par augmentation du premier indicateur (q) si le nombre d'objets dans le premier ensemble d'objets (S01) est supérieur à une première valeur prédéterminée et en diminuant le premier indicateur (q) si le nombre d'objets dans le premier ensemble d'objets (S01) est inférieur à une deuxième valeur prédéterminée.

7. Procédé selon la revendication 6, le premier indicateur (q) étant uniquement augmenté ou diminué entre une valeur maximum prédéterminée et une valeur minimum prédéterminée.

8. Dispositif (1) pour détecter un blocage d'un système de radar (2) d'un véhicule (V), comprenant:
une interface (11) conçue pour recevoir des données radar collectées par le système de radar (2) et pour recevoir des données de caméra collectées par un système de caméra (3) du véhicule (V);
une unité de détection (12) qui est conçue:
- pour détecter un premier ensemble d'objets (S01) dans les environs du véhicule (V) sur la base des données de caméra, et pour détecter un deuxième ensemble d'objets (S02) dans les environs du véhicule (V) sur la base des données de radar;
- pour déterminer un troisième ensemble d'objets (S03) comme intersection du premier ensemble d'objets (S01) et du deuxième ensemble d'objets (S02);
- pour déterminer un premier indicateur (q) basé sur un nombre d'objets dans le premier ensemble d'objets (S01), le premier indicateur (q) renvoyant à une qualité de capteur du système de caméra (3);
- pour déterminer un deuxième indicateur (r) basé sur une comparaison du nombre d'objets dans le premier ensemble d'objets (S01) avec un nombre d'objets dans le troisième ensemble d'objets (S03), le deuxième indicateur (r) renvoyant à une relation entre la qualité de capteur du système de caméra (3) et une qualité de capteur du système de radar (2); et
- pour détecter un blocage du système de radar (2) sur la base du premier indicateur (q) et du deuxième indicateur (r)
**caractérisé en ce que**
l'unité de détection (12) est en outre conçue pour détecter le blocage si une distance moyenne des objets dans le deuxième ensemble d'objets (S02) est inférieure à une valeur seuil de distance, et pour ajuster la valeur seuil de distance sur la base du deuxième indicateur (r).

9. Dispositif (1) selon la revendication 8, l'unité de détection (12) étant en outre conçue pour détecter un blocage si une plage de temps depuis une dernière détection d'un objet sur la base des données de radar est inférieure à une valeur seuil de temps, et pour ajuster la valeur seuil de temps sur la base du deuxième indicateur (r).

10. Dispositif (1) selon la revendication 9, l'unité de détection (12) étant en outre conçue pour ajuster la valeur seuil de distance et/ou la valeur seuil de temps par repondération de l'ancienne valeur en utilisant le deuxième indicateur (r).

11. Véhicule (V) comprenant
un système de radar (2) conçu pour recueillir des données radar;
un système de caméra (3) conçu pour recueillir des données de caméra;
**caractérisé en ce que**
le véhicule comprend en outre un dispositif (1) selon l'une quelconque des revendications précédentes 8 à 10, conçu pour détecter un blocage du système de radar (2) sur la base des données radar et des données de caméra.
